# EUROPEAN PATENT APPLICATION

(11) **EP 3 736 959 A1**
(43) Date of publication of application: **11.11.2020**
(21) Application number: 19173424.3
(22) Date of filing: 09.05.2019
(51) Int. Cl.: H02M 1/42, H02M 7/219, H05B 33/08, H02M 3/337

(54) **RESONANT HB CONVERTER**

(71) Applicant: Tridonic GmbH & Co. KG, 6851 Dornbirn (AT)
(72) Inventor: Klien, Dietmar, 6841 Mäder (AT); Lochmann, Frank, 88147 Achberg (DE)
(74) Representative: Rupp, Christian

(57) **Abstract**

The invention relates to a resonant half-bridge (HB) converter (100) with active power factor correction (PFC) function, comprising a HB converter circuitry (100c) supplying a resonance circuitry (100b) and output terminals for directly or indirectly supplying a lighting means load (104). Furthermore, the HB converter (100) comprises a control circuit (100a) for controlling a switching of the HB converter circuitry (100c). The control circuitry (100a) is supplied with a sensing signal representing at least a synchronization information with regard to an AC supply voltage of the converter (100), wherein the control circuitry (100a) varies a switching parameter of the HB converter (100) such that the input-current of the HB converter (100) follows an AC sine wave of the AC supply voltage.

## Description

### TECHNICAL FIELD OF THE INVENTION

The invention relates to a (isolated or non-isolated) resonant half-bridge (HB) converter with a power factor correction (PFC) function.

### BACKGROUND OF THE INVENTION

The so-called resonant converters have a resonant circuit, which can be a series, parallel or series-parallel resonant circuit. When configuring converters, one aim is to keep losses low. For example, resonant converters which comprise an LLC series-parallel resonant circuit having two inductances and one capacitance are well-known. Such converters have the advantage that energy-efficient operation with relatively low switching losses is possible.

Resonant LLC converters are for example well known for use within LED drivers. The converters can be configured or operated as a constant current source or a constant voltage source. A constant current source can be used to drive an LED arrangement directly, thus enabling a single stage driver.

The LLC converter comprises a switching arrangement (which together with the gate driving arrangement is generally referred to as the inverter) for controlling the conversion operation, and the switching is controlled using feedback or feedforward control, in order to generate the required output.

Another function implemented within a power converter which is supplied with mains (or other AC) power is an active (switched) power factor correction (PFC). The power factor of an AC electrical power system is defined as the ratio of the real power flowing to the load to the apparent power in the circuit. A power factor of less than one means that the voltage and current waveforms are not in phase, reducing the instantaneous product of the two waveforms. The real power is the capacity of the circuit for performing work in a particular time. The apparent power is the product of the current and voltage of the circuit. Due to energy stored in the load and returned to the source, or due to a non-linear load that distorts the wave shape of the current drawn from the source, the apparent power will be greater than the real power.

If a power supply is operating at a low power factor, a load will draw more current for the same amount of useful power transferred than for a higher power factor.

The power factor can be increased using power factor correction. For linear loads, this may involve the use of a passive network of capacitors or inductors. Non-linear loads typically require active power factor correction to counteract the distortion and raise the power factor. The power factor correction brings the power factor of the AC power circuit closer to 1 by supplying reactive power of opposite sign, adding capacitors or inductors that act to cancel the inductive or capacitive effects of the load.

The present invention relates to active PFC making use of switched power electronics to change the waveform of the current drawn by a load to improve the power factor. Active PFC circuits may for example be based on buck, boost or buck-boost switched mode converter topologies. Active power factor correction can be single-stage or multi-stage.

In the case of a switched mode power supply, a PFC boost converter is for example inserted between the bridge rectifier and the mains storage capacitor. The boost converter attempts to maintain a constant DC bus voltage on its output while drawing a current that is always in phase with and at the same frequency as the line voltage. Another switched-mode converter inside the power supply produces the desired output voltage or current from the DC bus.

Power factor correction may be implemented in a dedicated power factor correction circuit (called a pre-regulator), for example placed between the (mains) power supply and the switch mode power converter which then drives the load. This forms a dual stage system, and this is the typical configuration for high power LED applications (for example more than 25W). The power factor correction may instead be integrated into the switch mode power converter, which then forms a single stage system.

Therefore, in prior art, in order to provide a good total harmonic distortion (THD) and power factor (PF), AC/DC-converters (CV- and CC-output) use is made of a PFC. In particular, in practical applications, mostly boost-PFC and flyback-PFC are used. Moreover, a resonant half-bridge (HB) as PFC is also known, but it is used in constant-frequency mode with LF-PWM only.

However, the above mentioned prior art PFCs have some drawbacks, as it will be elucidated in the following.

The boost-PFC has a high inrush-current and is not isolated. Furthermore, the output-voltage is always above the input-voltage. At higher power, the boost-PFC should be operated in CCM instead of BCM and this increases switching-losses at high operation-frequencies.

The flyback PFC is limited regarding maximum switching-frequency, so operation in the MHz-range is not easy or possible.

Resonant HB in constant-frequency with LF-PWM has the drawback, that the LF-pulse-width-modulation (LF-PWM) increases the size of EMI-filter compared to a pure MHz PFC.

Therefore, it is an objective to provide for an improved resonant HB converter with PFC function.

### SUMMARY OF THE INVENTION

The object of the present invention is achieved by the solution provided in the enclosed independent claims. Advantageous implementations of the present invention are further defined in the dependent claims.

According to a first aspect, the invention relates to a resonant half-bridge (HB) converter with active power factor correction (PFC) function, comprising a HB converter circuitry supplying a resonance circuitry and output terminals for directly or indirectly supplying a lighting means load, further comprising a control circuit for controlling a switching of the HB converter circuitry. The control circuitry is supplied with a sensing signal representing at least a synchronization information with regard to an AC supply voltage of the converter, wherein the control circuitry varies a switching parameter of the HB converter such that the input-current of the HB converter follows an AC sine wave of the AC supply voltage (or a rectified version thereof).

The sensing signal may be tapped-off before or after a rectification stage for the AC mains voltage.

In a preferred embodiment of the HB converter according to the first aspect, the resonant half-bridge (HB) converter is isolated by means of a transformer supplied by the resonance circuitry.

In a preferred embodiment of the HB converter according to the first aspect, the resonant half-bridge (HB) converter further comprises a rectifier configured to rectify the AC supply voltage before supplying it to the HB. Moreover, the control circuit is further configured to detect an actual value of a rectified AC supply voltage and corresponding change of a basic frequency or the switching parameter of the half-bridge which affects an output current.

In a preferred embodiment of the HB converter according to the first aspect, the switching parameter of the half-bridge is modulated to have a sinusoidal shape.

In a preferred embodiment of the HB converter according to the first aspect, the switching parameter of the half-bridge is modulated to have a triangular shape.

In a preferred embodiment of the HB converter according to the first aspect, the switching parameter of the half-bridge is constant at zero crossings of the AC supply voltage.

In a preferred embodiment of the HB converter according to the first aspect, a hub of a change of the switching parameter of the half-bridge converter, in particular of the frequency, depends on a transmitting power, in particular a power drain at the output of the half-bridge (HB) converter.

In a preferred embodiment of the HB converter according to the first aspect, the frequency hub is comprised in the range between 400 and 700 kHz, or the frequency hub is comprised in the range between 1,2 and 1,5 MHz, or the frequency hub is comprised in the range between 1,5 and 1,8 MHz, or wherein the frequency hub is constant, preferably 300 kHz, or wherein the frequency hub depends on the operating frequency of the half-bridge, or wherein the frequency hub is percental constant.

In a preferred embodiment of the HB converter according to the first aspect, the change of the switching parameter of the half-bridge is cyclical, typically 100 Hz, and presents a 100 Hz ripple at an output of the converter.

In a preferred embodiment of the HB converter according to the first aspect, the half-bridge (HB) converter further comprises a smoothing circuit, wherein the smoothing circuit is configured to smooth the ripple at the output of the converter in order to obtain a smoothed AC voltage.

In a preferred embodiment of the HB converter according to the first aspect, the smoothing circuit is a capacitor.

In a preferred embodiment of the HB converter according to the first aspect, the behavior of the AC voltage or smoothed AC voltage is not measured continuously.

In a preferred embodiment of the HB converter according to the first aspect, the change of the switching parameter is synchronized with the behavior of AC voltage or the smoothed AC voltage.

In a preferred embodiment of the HB converter according to the first aspect, a change of a predetermined behavior of the switching parameter is triggered in dependence of predetermined characteristics of the AC voltage or of the smoothed AC voltage.

According to a second aspect, the invention relates to a method for directly or indirectly supplying lighting means load, comprising the following steps:
- controlling a HB converter circuitry, wherein a control circuitry is supplied with a sensing signal representing at least a synchronization information with regard to an AC supply voltage of a converter; and
- varying a switching parameter of the HB converter such that the input-current of the converter follows an AC sine wave of the AC supply voltage.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The invention will be explained in the followings together with the figures, wherein:
Fig. 1 shows a HB converter according to an embodiment;
Fig. 2 shows a HB converter according to another embodiment; and
Fig. 3 shows a method for for supplying lighting means load, according to an embodiment.

### DETAILED DESCRIPTION OF THE PREFERRED EMBODIMENTS

Aspects of the present invention are described herein in the context of a HB converter.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of a switched HB converter will be presented. However, as those skilled in the art will readily appreciate, these aspects may be extended to aspects of switched HB converters without departing from the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

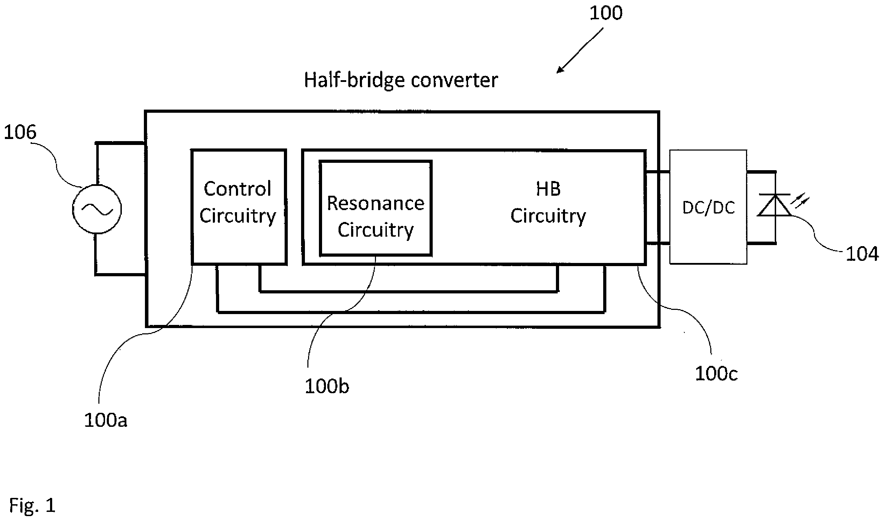

Now referring to Fig. 1, a resonant half-bridge (HB) converter 100 with active power factor correction (PFC) function is shown.

The HB converter 100 comprises a HB converter circuitry 100c supplying a resonance circuitry (100b) and output terminals for directly or indirectly supplying a lighting means load 104.

In an embodiment the lighting means load can be an LED.

Furthermore, the HB converter 100 comprises a control circuit 100a for controlling a switching of the HB converter circuitry 100c. The control circuitry 100a is supplied with a sensing signal representing at least a synchronization information with regard to an AC supply voltage 106 of the converter 100, wherein the control circuitry 100a varies a switching parameter of the HB converter 100 such that the input-current of the HB converter 100 follows an AC sine wave of the AC supply voltage 106.

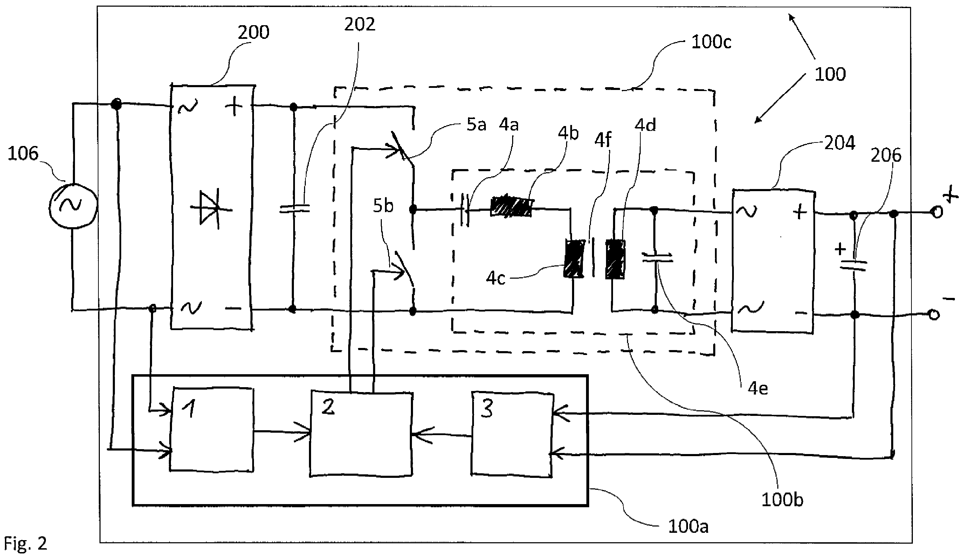

Fig. 2 shows the HB converter 100 according to another embodiment.

In this embodiment, the HB converter 100 comprises the AC-mains voltage 106. Moreover, the HB converter 100 comprises a bridge rectifier 200 and a filter capacitor 202.

Furthermore, the HB converter 100 comprises the passive resonance circuit 100b, in this embodiment being a LCC circuit comprising the capacitors 4a and 4e and the inductors 4b, 4c and 4d. In another embodiment, the resonance circuit 100b can be a LLC circuit.

Moreover, the complete HB circuitry 100c is shown comprising the resonance circuit 100b as well as the two switches 5a and 5b.

Furthermore, the HB converter 100 in Fig. 2 comprises a rectifier network 204 and a capacitance 206.

In this embodiment, the control circuitry 100a comprises three units:
an AC measuring unit 1 for measuring the AC input mains voltage 106 in order, for example, to synchronize to the zero-crossing;
a control circuit 2 for controlling the HB circuitry 100c. In particular, the control circuit 2 can be configured to vary the switching parameter of the HB 100c such that the input-current of the HB converter 100 follows an AC sine wave of the AC supply voltage 106; and
a measuring unit 3 for measuring output voltage for the servo loop.

In an embodiment, the resonant half-bridge (HB) converter 100 is isolated by means of an optional transformer 4f supplied by the resonance circuitry 100b.

According to another embodiment, the control circuit 100a is further configured to detect an actual value of the rectified AC supply voltage and corresponding change of a basic frequency or the switching parameter of the half-bridge 100c which affects the output current. The switching parameter of the half-bridge 100c can be modulated to have a sinusoidal shape or a triangular shape. Moreover, the switching parameter of the half-bridge 100c can be constant at zero crossings of the AC supply voltage (106). This preferably results in a trapezoidal shape of the modulation of the switching parameter with e.g. non rising and falling edges connected by constant portions.

According to an embodiment, a hub of a change of the switching parameter of the half-bridge converter 100, in particular of the frequency, depends on a transmitting power, in particular a power drain at the output of the half-bridge (HB) converter 100. In a preferred embodiment, the frequency hub is comprised in the range between 400 and 700 kHz, or in the range between 1,2 and 1,5 MHz, or in the range between 1,5 and 1,8 MHz. In another preferred embodiment, the frequency hub is constant, preferably 300 kHz, or the frequency hub depends on the operating frequency of the half-bridge 100c, or the frequency hub is percental constant.

The change of the switching parameter of the half-bridge 100c can be cyclical, typically 100 Hz, and can present a 100 Hz ripple at an output of the HB converter 100.

The half-bridge (HB) converter 100 further can comprise a smoothing circuit, the capacitor 206 in the embodiment shown in Fig. 2, wherein the smoothing circuit is configured to smooth the ripple at the output of the HB converter 100 in order to obtain a smoothed AC voltage. In an embodiment, the behavior of the AC voltage or smoothed AC voltage is not measured continuously.

In particular, the change of the switching parameter can be synchronized with the behavior of AC voltage 106 or the smoothed AC voltage. A change of a predetermined behavior of the switching parameter can be triggered in dependence of predetermined characteristics of the AC voltage 106 or of the smoothed AC voltage.

With the resonant HB-PFC (e.g. LLC or LCC) 100b in frequency-control-mode it is possible to operate the PFC in the MHz-range in order to reduce the size of the inductive components 4b, 4c and 4d.

Additionally, the SELV-barrier can easily be moved to the AC/DC-stage, which offers the possibility to use, for example, a cheap buck-converter as constant-current-control (DC/DC-stage) or to replace it completely by the AC/DC-stage. This topology is also capable for DC-input. This topology eliminates the inrush current to the main capacitor 202.

In one embodiment, the LCC or PFC is connected directly after the mains-rectifier and the input-current is controlled depending on the phase of input-voltage. The input current is reduced at zero-crossing of mains-voltage 106 with high switching-frequency and increased in the peak of mains-voltage 106. The (preferably digital) frequency-control can be provided by an ASIC or microcontroller (uC) 100a and can be based on calculations as well as look-up-tables.

The HB converter 100 provides the advantage of an isolated small size (due to high switching-frequency) and wide power-range PFC. The PFC has no inrush and the output-voltage can be designed independent on the input-voltage 106.

Moreover, it provides the advantage of smaller passive components and possible reduction of a 2-stage-approach to a 1-stage-solution. Finally, the size and material costs are reduced and the output-power can easily be increased to higher values.

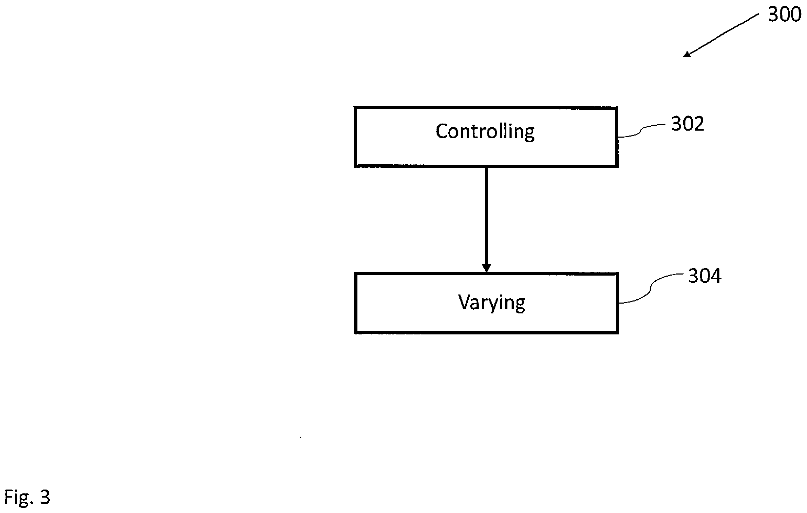

Fig. 3 shows a method 300 for directly or indirectly supplying lighting means load 104.

The method comprises the following steps:
- controlling 302 a HB converter circuitry 100c, wherein a control circuitry 100a is supplied with a sensing signal representing at least a synchronization information with regard to an AC supply voltage 106 of a converter 100; and
- varying 304 a switching parameter of the HB converter 100 such that the input-current of the converter 100 follows an AC sine wave of the AC supply voltage 106.

All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the spirit of scope of the invention. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A resonant half-bridge (HB) converter (100) with active power factor correction (PFC) function, comprising a HB converter circuitry (100c) supplying a resonance circuitry (100b) and output terminals for directly or indirectly supplying a lighting means load (104), further comprising a control circuit (100a) for controlling a switching of the HB converter circuitry (100c),
wherein the control circuitry (100a) is supplied with a sensing signal representing at least a synchronization information with regard to an AC supply voltage (106) of the converter (100), wherein the control circuitry (100a) varies a switching parameter of the HB converter (100) such that the input-current of the HB converter (100) follows an AC sine wave of the AC supply voltage (106) .

2. Resonant half-bridge (HB) converter (100) according to claim 1, wherein the resonant half-bridge (HB) converter (100) is isolated by means of a transformer (4f) supplied by the resonance circuitry (100b).

3. Resonant half-bridge (HB) converter (100) according to claim 1 or 2, wherein the resonant half-bridge (HB) converter (100) further comprises a rectifier configured to rectify the AC supply voltage (106) before supplying it to the HB, and wherein the control circuit (100a) is further configured to detect an actual value of a rectified AC supply voltage and corresponding change of a basic frequency or the switching parameter of the half-bridge which affects an output current.

4. Resonant half-bridge (HB) converter (100) according to any one of the preceding claims 1 to 3, wherein the switching parameter of the half-bridge is modulated to have a sinusoidal shape.

5. Resonant half-bridge (HB) converter (100) according to any one of the preceding claims 1 to 3, wherein the switching parameter of the half-bridge is modulated to have a triangular shape.

6. Resonant half-bridge (HB) converter (100) according to any one of the preceding claims 1 to 3, wherein the switching parameter of the half-bridge is modulated to have a trapezoidal shape.

7. Resonant half-bridge (HB) converter (100) according to any one of the preceding claims 3 to 6, wherein a hub of a change of the switching parameter of the half-bridge converter (100), in particular of the frequency, depends on a transmitting power, in particular a power drain at the output of the half-bridge (HB) converter (100) .

8. Resonant half-bridge (HB) converter (100) according to claim 7, wherein the frequency hub is comprised in the range between 400 and 700 kHz, or wherein the frequency hub is comprised in the range between 1,2 and 1,5 MHz, or wherein the frequency hub is comprised in the range between 1,5 and 1,8 MHz, or wherein the frequency hub is constant, preferably 300 kHz, or wherein the frequency hub depends on the operating frequency of the half-bridge, or wherein the frequency hub is percental constant.

9. Resonance switched half-bridge (HB) converter (100) according to claim 7, wherein the change of the switching parameter of the half-bridge is cyclical, typically 100 Hz, and presents a 100 Hz ripple at an output of the converter.

10. Resonant half-bridge (HB) converter (100) according to claim 9, wherein the half-bridge (HB) converter (100) further comprises a smoothing circuit, wherein the smoothing circuit is configured to smooth the ripple at the output of the converter in order to obtain a smoothed AC voltage.

11. Resonant half-bridge (HB) converter (100) according to claim 10, wherein the smoothing circuit is a capacitor.

12. Resonant half-bridge (HB) converter according to claim 10 or 11, wherein the behavior of the AC voltage or smoothed AC voltage is not measured continuously.

13. Resonant half-bridge (HB) converter (100) according to claim 10 or 12, wherein the change of the switching parameter is synchronized with the behavior of AC voltage or the smoothed AC voltage.

14. Resonant half-bridge (HB) converter (100) according to claim 13, wherein a change of a predetermined behavior of the switching parameter is triggered in dependence of predetermined characteristics of the AC voltage or of the smoothed AC voltage.

15. Method for directly or indirectly supplying lighting means load (104), comprising:
- Controlling (302) a HB converter circuitry (100c), wherein a control circuitry (100a) is supplied with a sensing signal representing at least a synchronization information with regard to an AC supply voltage (106) of a converter (100);
- varying (304) a switching parameter of the HB converter (100) such that the input-current of the converter (100) follows an AC sine wave of the AC supply voltage (106) .
